# EUROPEAN PATENT APPLICATION

(11) **EP 4 481 557 A1**
(43) Date of publication of application: **25.12.2024**
(21) Application number: 24767983.0
(22) Date of filing: 22.02.2024
(51) Int. Cl.: G06F 8/41, G06F 9/455

(54) **METHOD AND APPARATUS FOR MARKING OPERATION TYPE OF BYTECODE, AND ELECTRONIC DEVICE**

(30) Priority: 30.03.2023 CN 202310353125
(71) Applicant: HUAWEI TECHNOLOGIES CO., LTD., Shenzhen, Guangdong 518129 (CN)
(72) Inventor: HAO, Hao, Beijing 100191 (CN); SHI, Xiaohua, Beijing 100191 (CN); ZHANG, Kai, Shenzhen, Guangdong 518129 (CN)
(74) Representative: Gill Jennings & Every LLP
(86) International application number: PCT/CN2024/078011
(87) International publication number: WO 2024/198779

(57) **Abstract**

This application provides a method and an apparatus for hinting an operation type of bytecode, and an electronic device. In the method, the electronic device may obtain the bytecode, obtain type information of target data in each function corresponding to the bytecode, determine a first operation type of the bytecode based on the type information of the target data in each function, and hint the operation type of the bytecode based on the first operation type. In this application, during static compilation, the operation type of the bytecode corresponding to the function may be determined based on the type information of the target data in the bytecode by using the function as a unit. In embodiments of this application, a dynamic characteristic of a dynamically typed language does not need to be limited, and the operation type of the bytecode may be further accurately hinted.

## Description

This application claims priority to Chinese Patent Application No. 202310353125.1, filed with the China National Intellectual Property Administration on March 30, 2023 and entitled "METHOD AND APPARATUS FOR HINTING OPERATION TYPE OF BYTECODE, AND ELECTRONIC DEVICE", which is incorporated herein by reference in its entirety.

### TECHNICAL FIELD

Embodiments of this application relate to the field of computer technologies, and in particular, to a method and an apparatus for hinting an operation type of bytecode, and an electronic device.

### BACKGROUND

When running a program written in a programming language or a scripting language, a virtual machine may perform type checking on the program, to read type information of a formal parameter, a variable, and the like in the program. The virtual machine may perform subsequent computation based on the type information of the formal parameter, the variable, and the like in the program.

In a program written in a dynamically typed language, type hinting does not need to be performed on code. Therefore, an operation type of bytecode cannot be determined through type hinting, and type information of a formal parameter, a variable, and the like in the program cannot be determined based on the operation type of the bytecode. Currently, when the program is written, some dynamic characteristics of a programming language or a scripting language may be limited, so that a type of the variable in the program is more easily inferred, and the operation type of the bytecode is further inferred. However, an expression capability of the dynamically typed language may be limited in this method, and language incompatibility may occur.

### SUMMARY

Embodiments of this application provide a method and an apparatus for hinting an operation type of bytecode, and an electronic device, so that a dynamic characteristic of a dynamically typed language may not need to be limited, and the operation type of the bytecode may be accurately hinted.

According to a first aspect, an embodiment of this application provides a method for hinting an operation type of bytecode. The method may be performed by an electronic device or a chip in an electronic device. The following uses the electronic device as an example for description. It should be understood that a compiler may be deployed in the electronic device, to hint the operation type of the bytecode during compilation of a dynamically typed language.

In the method, the electronic device may obtain the bytecode. After obtaining the bytecode, the electronic device may obtain type information of target data in each function corresponding to the bytecode, to determine a first operation type of the bytecode based on the type information of the target data in each function. The electronic device may hint the operation type of the bytecode based on the first operation type. In a possible implementation, the target data includes at least one of the following: a function formal parameter, a function return value, a global variable, and a variable in a closure.

In a possible implementation, the bytecode is obtained from source code written in a dynamically typed language.

For example, the electronic device may receive source code. The source code may be written by a developer and input into the electronic device, or may be sent by another electronic device to the electronic device. This is not limited in this application. After receiving the source code, the electronic device may convert the source code into the bytecode.

In this embodiment of this application, the electronic device may hint the operation type of the bytecode during compilation, to avoid low program running efficiency caused by type checking performed by the electronic device during program running. In addition, the electronic device may obtain the operation type of the bytecode based on the type information of the target data in each function corresponding to the bytecode, so that the operation type of the bytecode can be accurately determined, a dynamic characteristic of the dynamically typed language (for example, a programming language or a scripting language) does not need to be limited in advance, and compatibility of the dynamically typed language can be improved.

In a possible implementation, the electronic device may further determine a second operation type of the bytecode in a running process of the bytecode, obtain the operation type of the bytecode based on the first operation type and the second operation type, and then hint the operation type of the bytecode based on the operation type of the bytecode.

In this implementation, in some cases, the electronic device may fail to determine or accurately determine the operation type of the bytecode based on the type information of the target data in each function corresponding to the bytecode. In this embodiment of this application, the electronic device may further determine the second operation type of the bytecode in the running process of the bytecode, and fuse the first operation type and the second operation type, to hint the operation type of the bytecode. This can supplement a disadvantage of the method for obtaining the operation type of the bytecode based on the type information of the target data in each function corresponding to the bytecode, and can further improve accuracy of the determined operation type of the bytecode.

The following describes the method for obtaining, by the electronic device, the type information of the target data in each function corresponding to the bytecode.

In a first manner, after obtaining the bytecode, the electronic device may establish a control flow graph and a data flow graph of the bytecode, and in a process of establishing the control flow graph and the data flow graph, gather, by using a union-find algorithm, target data that appears in operands of same bytecode, to obtain at least one first set. The electronic device may determine a type of target data of an unknown type based on a type of target data of a known type in each first set, to obtain type information of the target data of the unknown type. For example, the electronic device may use a union set of the type of the target data of the known type in each first set as the type of the target data of the unknown type, where the type information of the target data of the unknown type includes the type of the target data of the unknown type.

In a second manner, the electronic device may alternatively infer, based on a type of the bytecode, a type of target data related to the bytecode. It should be understood that the bytecode obtained by the electronic device may be considered as a whole, and the bytecode may include a plurality of pieces of bytecode. For example, each function may correspond to at least one line of bytecode, and each line of bytecode may include a plurality of pieces of bytecode.

Herein, an example in which the bytecode includes first bytecode and second bytecode is used. The electronic device may determine a logical association relationship between the first bytecode and the second bytecode, determine a type of the second bytecode of an unknown type based on a type of the first bytecode of a known type, and further determine, based on the type of the second bytecode, type information of target data associated with the second bytecode.

For example, the electronic device may use the type of the first bytecode of the known type as the type of the second bytecode of the unknown type, and use the type of the second bytecode as a type of the target data associated with the second bytecode. The type information of the target data associated with the second bytecode may include the type of the target data associated with the second bytecode.

For example, when an output of the first bytecode is an input of the second bytecode, and the first bytecode and the second bytecode meet a preset condition, gathering the first bytecode and the second bytecode, to obtain at least one second set. The electronic device may determine the type of the second bytecode of the unknown type based on the type of the first bytecode of the known type in each second set. For example, the electronic device may use a union set of the type of the first bytecode of the known type in each first set as the type of the second bytecode of the unknown type.

The preset condition is that neither the first bytecode nor the second bytecode is a comparison instruction. This is because a type of the comparison instruction is a boolean type.

In a third manner, the electronic device may alternatively simulate the running process of the bytecode, to establish a relationship between an operand of the bytecode and an operation result of the bytecode, to determine a type of target data in the bytecode, and further determine the type information of the target data in each function corresponding to the bytecode.

In this application, the electronic device may obtain the type information of the target data in each function in the foregoing plurality of manners, to obtain accurate type information of the target data, and further obtain an accurate operation type of the bytecode.

The following describes a method for determining, by the electronic device, the first operation type of the bytecode based on the type information of the target data in each function.

In a first manner, the type information of the target data in each function includes a type of the target data in each function. The electronic device may use a union set of the type of the target data in each function as the first operation type.

In a second manner, the type information of the target data in each function includes a type of the target data in each function, and each function corresponds to at least one line of bytecode. The electronic device may use a union set of a type of target data in a function corresponding to each line of bytecode as an operation type of each line of bytecode, where the first operation type includes an operation type of the at least one line of bytecode corresponding to each function.

In this application, the electronic device may obtain the accurate operation type of the bytecode based on the accurately determined type information of the target data in each function.

The following describes a method for determining, by the electronic device, the second operation type of the bytecode in the running process of the bytecode.

Each time when running the bytecode, the electronic device may call a different function corresponding to the bytecode. Therefore, the electronic device may obtain, in the running process of the bytecode, operation information of bytecode corresponding to the called function, where the operation information includes a type of an operand and a type of an operation result. The electronic device may obtain, based on the operation information of the bytecode corresponding to the called function, an operation type of the bytecode corresponding to the called function.

When running the bytecode, the electronic device may accurately determine the operation type of the bytecode based on the operation information of the bytecode corresponding to the called function, and the operation type of the bytecode does not need to be inferred by using an inference method. In this implementation, accuracy of the operation type of the bytecode is high.

In a possible implementation, for a same function, each time the function is called, operation information of the bytecode corresponding to the function may be different. Therefore, the operation information of the bytecode corresponding to the called function includes at least two versions, and different versions of the operation information may indicate different operation information of the bytecode corresponding to the called function.

The electronic device may obtain a hit rate of operation information of the bytecode corresponding to the called function in each version, and obtain, based on the hit rate, the operation type of the bytecode corresponding to the called function.

In this implementation, the electronic device may obtain operation information of the bytecode corresponding to the called function in different versions, to obtain a more comprehensive and more accurate operation type of the bytecode.

In a possible implementation, the electronic device may use a union set of operation types corresponding to top N pieces of operation information sorted by hit rate as the operation type of the bytecode corresponding to the called function, where N is an integer greater than or equal to 1. In a possible implementation, the electronic device may use a union set of operation types of the bytecode corresponding to the called function in all versions as the operation type of the bytecode corresponding to the called function.

In a possible implementation, after obtaining the first operation type of the bytecode and the second operation type of the bytecode, the electronic device may use a union set of the first operation type and the second operation type as the operation type of the bytecode. In a possible implementation, for same bytecode, the first operation type and the second operation type of the bytecode include different versions of operation types. In this case, the electronic device may obtain hit rates of the operation types of the bytecode in the different versions, and then use a union set of operation types corresponding to top N pieces of operation information sorted by hit rate as the operation type of the bytecode.

In a possible implementation, the operation type of the bytecode may include at least one version. After hinting the operation type of the bytecode, the electronic device may further generate at least one version of binary code based on the hinted bytecode. In this case, the electronic device may run the binary code based on the at least one version of the binary code, to implement running of a program.

In this implementation, the electronic device may obtain the at least one version of the binary code, so as to accurately run the program.

According to a second aspect, an embodiment of this application provides an apparatus for hinting an operation type of bytecode. The apparatus for hinting an operation type of bytecode may be an electronic device or a chip in an electronic device, and may be configured to perform the method in the first aspect. The apparatus for hinting an operation type of bytecode may include a processing module and a hinting module.

The processing module is configured to: obtain the bytecode, obtain type information of target data in each function corresponding to the bytecode, and determine a first operation type of the bytecode based on the type information of the target data in each function.

The hinting module is configured to hint the operation type of the bytecode based on the first operation type.

In a possible implementation, the processing module is specifically configured to: determine a second operation type of the bytecode in a running process of the bytecode, obtain the operation type of the bytecode based on the first operation type and the second operation type, and hint the operation type of the bytecode based on the operation type of the bytecode.

In a possible implementation, the target data includes at least one of the following: a function formal parameter, a function return value, a global variable, and a variable in a closure.

In a possible implementation, the processing module is specifically configured to: establish a control flow graph and a data flow graph of the bytecode; in a process of establishing the control flow graph and the data flow graph, gather, by using a union-find algorithm, target data that appears in operands of same bytecode, to obtain at least one first set; and determine a type of target data of an unknown type based on target data of a known type in each first set, to obtain type information of the target data of the unknown type.

In a possible implementation, the bytecode includes first bytecode and second bytecode.

The processing module is specifically configured to: determine a logical association relationship between the first bytecode and the second bytecode; determine a type of the second bytecode of an unknown type based on a type of the first bytecode of a known type; and determine, based on the type of the second bytecode, type information of target data associated with the second bytecode.

In a possible implementation, when an output of the first bytecode is an input of the second bytecode, and the first bytecode and the second bytecode meet a preset condition, the processing module is further configured to gather the first bytecode and the second bytecode, to obtain at least one second set.

In a possible implementation, the preset condition is that neither the first bytecode nor the second bytecode is a comparison instruction.

In a possible implementation, the processing module is specifically configured to simulate the running process of the bytecode, to obtain the type information of the target data in each function.

In a possible implementation, the type information of the target data in each function includes a type of the target data in each function.

The processing module is specifically configured to use a union set of the type of the target data in each function as the first operation type.

In a possible implementation, the type information of the target data in each function includes a type of the target data in each function, and each function corresponds to at least one line of bytecode.

The processing module is specifically configured to use a union set of a type of target data in a function corresponding to each line of bytecode as an operation type of each line of bytecode, where the first operation type includes an operation type of the at least one line of bytecode corresponding to each function.

In a possible implementation, the processing module is specifically configured to: in the running process of the bytecode, obtain operation information of bytecode corresponding to a called function, where the operation information includes a type of an operand and a type of an operation result; and obtain, based on the operation information of the bytecode corresponding to the called function, an operation type of the bytecode corresponding to the called function.

In a possible implementation, the operation information of the bytecode corresponding to the called function includes at least two versions. The processing module is specifically configured to: obtain a hit rate of operation information of the bytecode corresponding to the called function in each version; and obtain, based on the hit rate, the operation type of the bytecode corresponding to the called function.

In a possible implementation, the processing module is specifically configured to use a union set of operation types corresponding to top N pieces of operation information sorted by hit rate as the operation type of the bytecode corresponding to the called function, where N is an integer greater than or equal to 1.

In a possible implementation, the processing module is specifically configured to use a union set of the first operation type and the second operation type as the operation type of the bytecode.

In a possible implementation, the operation type of the bytecode includes at least one version. The apparatus for hinting an operation type of bytecode may further include a binary code generation module.

The binary code generation module is configured to generate at least one version of binary code based on the hinted bytecode.

In a possible implementation, the apparatus for hinting an operation type of bytecode may further include a transceiver module and a bytecode generation module, where the transceiver module is configured to receive source code. The bytecode generation module is configured to convert the source code into the bytecode.

In a possible implementation, the bytecode is obtained from source code written in a dynamically typed language.

According to a third aspect, an embodiment of this application provides an electronic device. The electronic device may include a processor and a memory. The memory is configured to store computer-executable program code, where the program code includes instructions. When the processor executes the instructions, the instructions enable the electronic device to perform the method in the first aspect.

According to a fourth aspect, an embodiment of this application provides an electronic device. The electronic device may be the apparatus for hinting an operation type of bytecode in the second aspect or the electronic device in the first aspect. The electronic device may include a unit, module, or circuit configured to perform the method provided in the first aspect.

According to a fifth aspect, an embodiment of this application provides a computer program product including instructions. When the computer program product is run on a computer, the computer is enabled to perform the method in the first aspect.

According to a sixth aspect, an embodiment of this application provides a computer-readable storage medium. The computer-readable storage medium stores instructions, and when the instructions are run on a computer, the computer is enabled to perform the method in the first aspect.

For beneficial effects of the possible implementations in the second aspect to the sixth aspect, refer to the beneficial effects brought by the first aspect. Details are not described herein again.

Embodiments of this application provide a method and an apparatus for hinting an operation type of bytecode, and an electronic device. In the method, the electronic device may obtain the bytecode, obtain type information of target data in each function corresponding to the bytecode, determine a first operation type of the bytecode based on the type information of the target data in each function, and hint the operation type of the bytecode based on the first operation type. In this application, during static compilation, an operation type of bytecode corresponding to a function may be determined based on type information of target data in the bytecode by using the function as a unit. In embodiments of this application, a dynamic characteristic of a dynamically typed language does not need to be limited, and the operation type of the bytecode may be further accurately hinted.

### BRIEF DESCRIPTION OF DRAWINGS

FIG. 1 is a schematic flowchart of static compilation;
FIG. 2 is a schematic flowchart of static compilation according to an embodiment of this application;
FIG. 3 is a schematic flowchart of an embodiment of a method for hinting an operation type of bytecode according to an embodiment of this application;
FIG. 4 is a diagram of source code and bytecode of an add function according to an embodiment of this application;
FIG. 5 is a schematic flowchart of simulating running an add function according to an embodiment of this application;
FIG. 6 is a diagram of source code and bytecode of a Fibonacci function according to an embodiment of this application;
FIG. 7 is a diagram of types of bytecode of a Fibonacci function according to an embodiment of this application;
FIG. 8 is a process of hinting an operation type of bytecode by an electronic device according to an embodiment of this application;
FIG. 9 is a schematic flowchart of calling a function by an electronic device according to an embodiment of this application;
FIG. 10 is another schematic flowchart of calling a function by an electronic device according to an embodiment of this application;
FIG. 11 is a schematic flowchart of another embodiment of a method for hinting an operation type of bytecode according to an embodiment of this application;
FIG. 12 is a diagram of generating different versions of binary code according to an embodiment of this application; and
FIG. 13 is a diagram of another structure of an electronic device according to an embodiment of this application.

### DESCRIPTION OF EMBODIMENTS

Definitions of terms in embodiments of this application are as follows:
Source code: The source code is a source program written in a programming language or a scripting language. In an embodiment, the programming language and the scripting language may be referred to as high-level languages.

The source code cannot be identified and executed by a computer. Before the execution, the source code can be translated into machine language code. Based on different translation manners, execution is classified into compiled execution and interpreted execution. Compiled execution is a process in which source code is compiled into a target program by a compiling program, and then the target program is run by a computer. A main difference between interpreted execution (interpreter) and compiled execution is that an interpreter does not generate object code during translation, and the interpreter executes intermediate code while translating source code. For example, when reading a source program, the interpreter first invokes a language analysis program to perform lexical analysis and partial syntax checking, establishes a mnemonic table, and converts the source program into intermediate code. The interpreter then invokes an interpreted execution program to perform syntax checking and perform interpreted execution on the intermediate code piece by piece. In short, the interpreter can read and translate statements in the source program one by one, and execute translated piece by piece.

Interpreter: The interpreter can directly perform interpreted execution on source code without translating the source code into a target program in advance. For details about functions of the interpreter, refer to the related descriptions of the interpreter in "Interpreted execution".

Bytecode: The bytecode is intermediate code generated after syntax analysis is performed on source code.

Dynamically typed language: The dynamically typed language may include but is not limited to Python, JavaScript (JS), Ruby, Perl, PHP, R, Dart, Lua and Objective-C in embodiments of this application. It should be understood that an example in which the dynamically typed language is JS is used for description in the following embodiments.

Compiler: The compiler is a program that translates "a language (such as a high-level language)" into "another language (such as a low-level language)". In an embodiment, the compiler may run in hardware, and the hardware that carries the compiler may be referred to as a compilation tool or a compilation device. An electronic device described in the following embodiments may carry a compiler, and the electronic device may implement static compilation on a dynamically typed language.

Virtual machine (virtual machine, VM): The virtual machine is a complete computer system that is simulated by using software, has functions of a complete hardware system, and runs in an entirely isolated environment. In embodiments of this application, a virtual machine in an electronic device may run a program.

Type checking (type checking): The type checking is a process of checking type constraints of a value and an expression in a program to ensure that a program behavior is well defined. For example, for var a = 1, a is a variable, and 1 is a value. Being well defined does not mean that the program has no error bug at all. Instead, a programming language defines a set of program exception errors at the beginning of design (different programming languages have different definitions). Provided that the program does not have these errors, the program is considered to be well defined.

In an embodiment, type checking may include checking a type of a constant, a variable, an array, a list, an object, and the like in the program. In an embodiment, a constant, a variable, an array, a list, an object, a value, an expression, and the like in the program may be referred to as data in the program, and a type of the constant, the variable, the array, the list, the object, and the like in the program may be referred to as a data type.

In an embodiment, the data type may include but is not limited to an integer type (integer, int), a string (string) type, a single-precision type/floating point type (float), a double-precision type (double), a boolean type (bool), and the like.

Type hinting: For example, a type of a constant, a variable, an array, a list, or an object in a program is hinted, so that a virtual machine can determine the type of the constant, the variable, the array, the list, the object, or the like in the program when running the program.

Operation type of bytecode: The operation type of the bytecode can formally describe how each step of computation is performed in a computer system. In an embodiment, the operation type of the bytecode is similar to a concept of operational semantics (operational semantics). For example, the bytecode is "A + B", where A is a string (string) type, and B is a string type. In this case, an operation type of the bytecode is "addition of the string types". For example, the bytecode is "string.split()", and an operation type of the bytecode is "function call".

Formal parameter: A parameter included in a function is referred to as a formal parameter. An actual parameter is a value assigned to a function when the function is called.

Global variable: In JS, the global variable may be established by a function or anywhere in a program. The global variable can be referenced by all objects or functions in the program.

Closure: The closure can be considered as a combination of functions and variables.

Static compilation of a dynamically typed language may be understood as compiling code written in a dynamically typed language into a binary executable file or binary code. Static compilation of the dynamically typed language has a wide range of applications, and has the following advantages: First, deployment of a program can be greatly simplified. Second, an external native function interface can be called more conveniently. Third, compared with a just-in-time (just-in-time, JIT) compilation execution engine, program performance is more predictable. Fourth, compared with a non-JIT execution engine, execution efficiency is higher.

A type hint in a program is an important basis for determining an operation type of bytecode. However, for a program written in a dynamically typed language, type hinting does not need to be performed on code. Therefore, currently, for the program written in the dynamically typed language, an operation type of bytecode cannot be determined based on a type hint. Currently, when running the program written in the dynamically typed language, a virtual machine may perform dynamic type checking, to obtain type information of a formal parameter, a variable, and the like in the program. The virtual machine may perform subsequent computation based on the type information of the formal parameter, the variable, and the like in the program.

To improve running efficiency of the program, static type checking or partially static type checking may be performed during static compilation of the dynamically typed language, so that overheads of type checking during program running can be reduced.

In an embodiment, currently, a Hindley-Milner type system may be used to perform type hinting on the program. For example, in the Hindley-Milner type system, a type of a value of a known type in the program may be used to infer a type of a variable of an unknown type in the program. However, there is a problem in using the type system that a type of a variable cannot be accurately determined.

For example, for a computation formula "A + B = C", assuming that a type of C is known as a string type, when the Hindley-Milner type system is used, it may be inferred that A may be a string type, and B may be an integer type (int), or A may be an integer type, and B may be a string type. However, a specific type of A and a specific type of B cannot be accurately determined. The type that is of the variable and that is inferred by using the Hindley-Milner type system is over-generalized, and the type of the variable cannot be accurately determined.

In an embodiment, some dynamic characteristics of the dynamically typed language may be further limited, so that the type of the variable in the program is more easily inferred. However, an expression capability of the dynamically typed language may be limited in this method, and language incompatibility may occur. For example, if A is assigned a value of 1, and A is limited to be an integer type in advance, when the program is run, it may be determined that A is an integer type based on the limit on the dynamically typed language in advance. In an embodiment, for example, type conversion, a read-only attribute, disabling index-based assignment of a string, and a monomorphic mutable variable may alternatively be limited, to limit some dynamic characteristics of the dynamically typed language. This facilitates to determine the type of the variable more easily.

In embodiments of this application, to improve running efficiency of a program, a method for hinting an operation type of bytecode may be provided. During static compilation of a dynamically typed language, an operation type of bytecode corresponding to a function may be determined based on type information of target data in the bytecode by using the function as a unit. In embodiments of this application, a dynamic characteristic of the dynamically typed language does not need to be limited, and the operation type of the bytecode may be further accurately hinted.

It should be understood that the method for an operation type of bytecode provided in embodiments of this application may be performed by an electronic device, and the electronic device may be a device on which a compiler is deployed. The electronic device may hint the operation type of the bytecode during static compilation of the dynamically typed language. For example, the electronic device may be a computer, a mobile phone, a tablet computer (portable Android device, PAD), a personal digital assistant (personal digital assistant, PDA), a handheld device having a wireless communication function, a computing device, or the like. A form of the electronic device is not specifically limited in embodiments of this application.

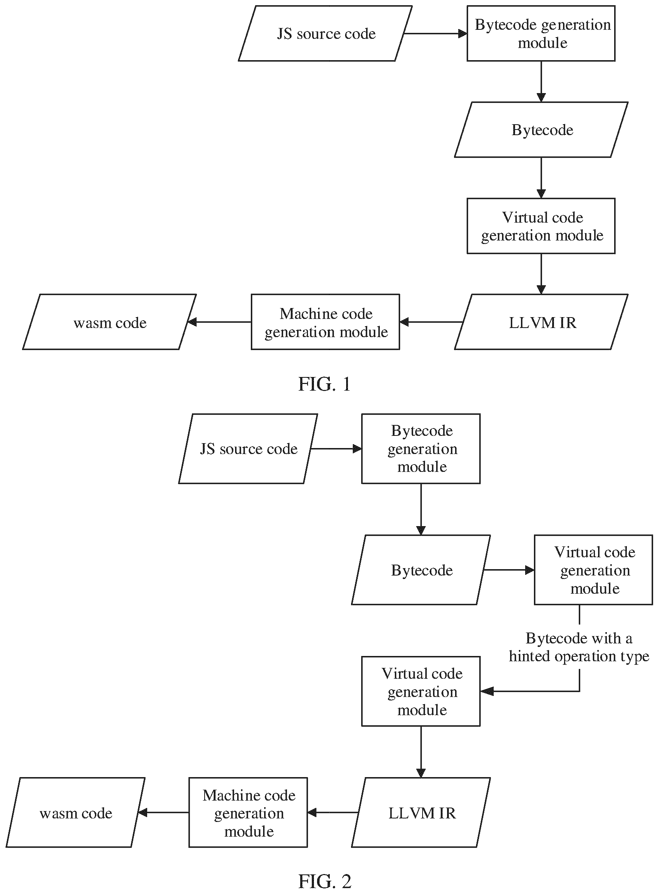

Before the method for marking an operation type of bytecode provided in embodiments of this application is described, a static compilation process of a dynamically typed language is first described with reference to FIG. 1. The static compilation process of the dynamically typed language may be understood as a process in which an electronic device compiles the dynamically typed language into another language. It should be understood that, in FIG. 1, an example in which the dynamically typed language is JS and the electronic device compiles the JS into machine code wasm code is used to describe the static compilation process of the dynamically typed language. In an embodiment, the wasm code may be considered as a type of binary code.

Refer to FIG. 1. In an embodiment, the electronic device may include a bytecode generation module, a virtual code generation module, and a machine code generation module. The bytecode generation module, the virtual code generation module, and the machine code generation module may cooperate with each other, to implement static compilation of the dynamically typed language. In an embodiment, the bytecode generation module, the virtual code generation module, and the machine code generation module may form a compiler.

In an embodiment, the bytecode generation module may be a QuickJS frontend (QuickJS frontend), the virtual code generation module may be, for example, a CodeGen module, and the machine code generation module may be, for example, an LLVM backend (LLVM backend).

In embodiments of this application, a developer may write source code (JS code) in the dynamically typed language JS, and input the JS code to the electronic device for compilation. The bytecode generation module may invoke, in response to the JS code input to the electronic device, a language analysis program to perform lexical analysis and partial syntax checking on the JS code, to convert the JS code into bytecode. The virtual code generation module may generate, based on the bytecode, virtual code, for example, an LLVM intermediate representation (intermediate representation, IR). The machine code generation module can convert the LLVM IR into wasm code. It should be understood that specific principles and methods of converting the JS code into the bytecode, converting the bytecode into the LLVM IR, and converting the LLVM IR into the wasm code are not described in embodiments of this application.

In this embodiment of this application, to improve running efficiency of a program, an operation type of bytecode may be hinted in the static compilation process of the dynamically typed language. Refer to FIG. 2. In an embodiment, the electronic device may further include an operation type hinting module.

In an embodiment, after the bytecode generation module generates the bytecode, the operation type hinting module may obtain an operation type of the bytecode, hint the operation type of the bytecode, and send the hinted bytecode to the virtual code generation module.

In an embodiment, the operation type hinting module may further generate operation type information of the bytecode based on the operation type of the bytecode, where the operation type information indicates the operation type of the bytecode. In this embodiment, the operation type hinting module may send the bytecode and the operation type information of the bytecode to the virtual code generation module. A form of content sent by the operation type hinting module to the virtual code generation module is not limited in this embodiment of this application.

In this embodiment of this application, because the operation type hinting module hints the operation type of the bytecode, the virtual code generation module may interact with the machine code generation module, and generate binary code based on the operation type of the bytecode. For example, the virtual code generation module may generate an LLVM IR based on the operation type of the bytecode, and the machine code generation module may generate binary code, for example, wasm code, based on the LLVM IR.

It should be understood that, in a conventional technology, with reference to FIG. 1, in the static compilation process of the dynamically typed language, when the electronic device does not hint the operation type of the bytecode, the electronic device may still generate binary code based on the bytecode. However, because the electronic device does not hint the operation type of the bytecode, when running wasm code, the electronic device needs to perform type checking on the wasm code. This affects running efficiency. Refer to FIG. 2. In this embodiment of this application, the electronic device may hint the operation type of the bytecode in the static compilation process of the dynamically typed language. In this case, when the electronic device runs the wasm code, type checking can be avoided or overheads of type checking can be reduced, and the running efficiency is improved.

The method for marking an operation type of bytecode provided in this embodiment of this application is described below with reference to specific embodiments. The following several embodiments may be combined with each other, and a same or similar concept or process may not be described repeatedly in some embodiments.

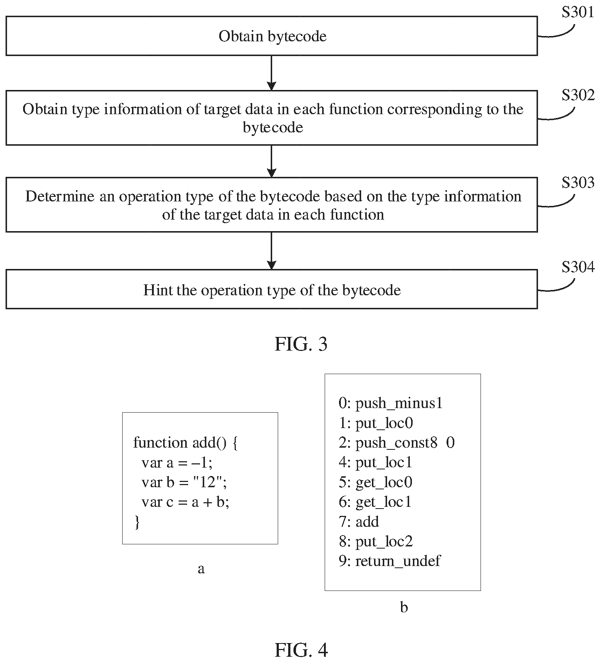

FIG. 3 is a schematic flowchart of an embodiment of a method for hinting an operation type of bytecode according to an embodiment of this application. In FIG. 3, an example in which an execution body is the electronic device shown in FIG. 2 is used for description. Refer to FIG. 3. The method for hinting an operation type of bytecode provided in this embodiment of this application may include the following steps.

S301: Obtain the bytecode.

In an embodiment, the electronic device may receive source code input by a developer, and convert the source code into bytecode, to obtain the bytecode. For details, refer to the related descriptions in FIG. 1. In an embodiment, a bytecode generation module may be deployed independent of the electronic device. After writing the source code, the developer may convert the source code into the bytecode by using the bytecode generation module, and the developer may input the bytecode into the electronic device. In this case, the electronic device may obtain the bytecode. A manner of obtaining the bytecode by the electronic device is not limited in this embodiment of this application.

S302: Obtain type information of target data in each function corresponding to the bytecode.

The source code may include at least one function. Correspondingly, after the source code is converted into the bytecode, the bytecode may correspond to the at least one function. It should be understood that the function is an important program segment, each function may correspond to one function identifier, and the function identifier is used to distinguish between different functions. For example, the function identifier may include but is not limited to a function name, a function number, and the like. It should be understood that a function may be called in a program running process.

In this embodiment of this application, the electronic device may obtain, based on the function identifier, the type information of the target data in each function by using a function as a unit. The target data may include at least one of the following: a function formal parameter, a function return value, a global variable, and a variable in a closure. The type information of the target data may include a type of the target data. For example, the type of the target data may include but is not limited to an integer type, a string type, a single-precision type/floating point type, a double-precision type, and a boolean type.

In an embodiment, types of some target data in the function may be determined, and the electronic device may determine the type of the target data by using the bytecode. For example, for a simple add function "A + B = C", when a formal parameter A and a formal parameter B are written with values, types of two operands of the add function are determined. For example, A is an integer type, and B is a string type.

In an embodiment, for target data of an unknown type in the function, a type of the target data may be obtained by using a clustering method. In this embodiment of this application, the electronic device may establish a control flow graph (control flow graph, CFG) and a data flow graph (data flow graph, DFG) based on the bytecode.

The control flow graph is an abstract representation of a process or bytecode, and is an abstract data structure used in a compiler. The control flow graph is internally maintained by the compiler, and represents all paths to be traversed during execution of a program. The control flow graph represents, in a form of a graph, a possible flow direction of execution of all basic blocks in one process, and can further reflect a real-time execution process of the process. In an embodiment, the control flow graph may be understood to represent arithmetic logic of a function corresponding to the bytecode. For example, a node in the control flow graph covers each statement of executing the bytecode, and an edge in the control flow graph covers each branch of executing the bytecode. The control flow graph may further include a loop structure, for example, a for loop or a while loop. The loop structure may be understood as loop execution when a characteristic condition is met. The data flow graph is a graph representing a data dependency relationship between operations of the bytecode.

In this embodiment of this application, in a process of establishing the control flow graph and the data flow graph, the electronic device may gather, by using a union-find algorithm, target data that appears in operands of same bytecode, to obtain at least one first set. The electronic device may determine a type of target data of an unknown type based on other target data of a known type in a same first set. In an embodiment, the target data of the unknown type in the same first set may share a type of the target data of the known type. For example, if the first set includes target data "A, B, and C", and it is known that A is an integer type, and B is a string type, the electronic device may determine that C may be an integer type or a string type.

In an embodiment, the electronic device may further simulate the running process of the bytecode, to establish a relationship between an operand of the bytecode and an operation result of the bytecode, and further determine the type of the target data in the bytecode. For example, when ignoring an actual data value, the electronic device may simulate the running process of the bytecode based on semantics of the bytecode, and perform operations such as pushing and popping the operand of the bytecode into and from a stack.

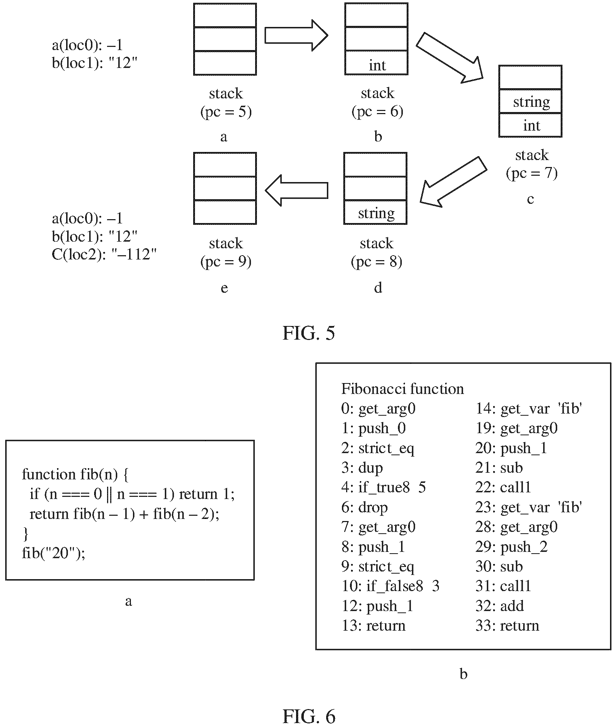

In FIG. 4 and FIG. 5, an add function is used as an example, to describe a process in which the electronic device simulates running the bytecode. a in FIG. 4 shows source code corresponding to the bytecode, and b in FIG. 4 shows the bytecode. a to e in FIG. 5 show a process of pushing and popping the operand into and from the stack when the electronic device simulates running the bytecode. For example, when an offset of 5 is pointed to, that is, bytecode having an offset of 5 is run, two operands a and b of the addition are written with values, and types of the operands are further determined. For example, a is an integer type, and b is a string type. In addition, an operand stack is empty, as shown in a in FIG. 5.

When an offset of 6 is pointed to, the electronic device may separately load a and b into the operand stack. It should be understood that, in this case, the operand stack is not related to values of a and b, but is related only to a data type of the operand. When an offset of 7 is pointed to, the electronic device executes an add instruction add. As shown in c in FIG. 5, in this case, because types of two operands at the top of the operand stack are respectively a string type and an integer type, according to the ECMA-262 standard, a result of an addition operation may be a string type. Therefore, the electronic device may perform an agreed operation on the operand stack according to the add instruction, so that the two operands at the top are popped from the stack, and the string type is pushed into the stack, as shown in d in FIG. 5. The electronic device may finally bind the string type to a variable c, that is, mark the variable c as a string type.

The electronic device may sequentially traverse, based on the control flow graph, the bytecode to simulate the running process of the bytecode, to obtain the type of the target data in each function corresponding to the bytecode.

In an embodiment, it should be understood that the bytecode converted from the source code may be divided into a plurality of pieces of bytecode. For example, bytecode corresponding to each function may be referred to as one piece of bytecode, or each line of bytecode corresponding to each function may be referred to as one piece of bytecode, or each piece of bytecode in each line of bytecode is used as one piece of bytecode. This embodiment of this application may use an example of each piece of bytecode in each line of bytecode corresponding to the function. In this case, the bytecode converted from the source code may include the plurality of pieces of bytecode. The following uses an example in which the bytecode converted from the source code may include first bytecode and second bytecode for description.

The electronic device may determine a logical association relationship between bytecode based on the control flow graph, determine a type of bytecode of an unknown type based on a type of bytecode of a known type, and determine, based on the type of the bytecode, a type of target data related to the bytecode. In other words, the electronic device may determine a logical association relationship between the first bytecode and the second bytecode based on the control flow graph. If a type of the first bytecode is known, and a type of the second bytecode is unknown, the electronic device may determine the type of the second bytecode of an unknown type based on the type of the first bytecode of the known type, and then determine, based on the type of the second bytecode, a type of target data associated with the second bytecode.

When an output of the first bytecode is an input of the second bytecode, and the first bytecode and the second bytecode meet a preset condition, the first bytecode and the second bytecode may be gathered, to obtain at least one second set. The bytecode included in the second set is bytecode that has a logical association. In an embodiment, the preset condition may be that the first bytecode and the second bytecode are not comparison instructions, because a type of the comparison instruction is a boolean type.

For example, bytecode of an operand and bytecode of addition in the add function may be gathered to obtain a second set, where the bytecode of the operand and the bytecode of the addition in the second set may belong to a same equivalence class. In an embodiment, a set of types of bytecode included in a same second set may be used as a type of bytecode of an unknown type in the same second set. For example, a same second set includes bytecode A, bytecode B, and bytecode C. If the bytecode A corresponds to an operand a, a type of the bytecode A may be an integer type. If the bytecode B corresponds to an operand b, a type of the bytecode B is a string type. Because the bytecode C, the bytecode a and the bytecode B belong to a same equivalence class, and are in the same second set, a type of the bytecode C may be an integer type or a string type.

After obtaining the type of the bytecode, the electronic device may determine the type of the target data in each function based on the type of the bytecode related to the target data in each function. For example, if target data c in the add function is related to the bytecode C, the electronic device may use the type "integer type or string type" of the bytecode C as a type of the target data c.

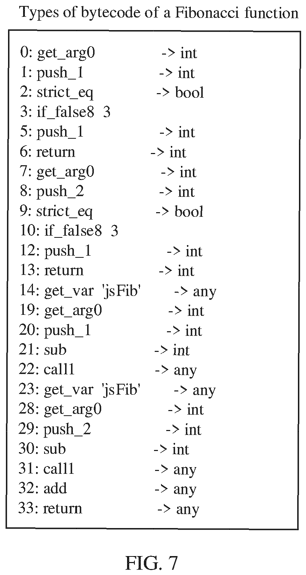

For example, a in FIG. 6 is source code of a Fibonacci function (fib), and b in FIG. 6 is bytecode corresponding to the source code of the Fibonacci function. FIG. 7 shows types of the bytecode that are determined based on a logical association relationship between the bytecode. A formal parameter n in the source code is used as an example. Bytecode related to the formal parameter n is bytecode having offsets of 0, 7, 19, and 28 respectively. Based on FIG. 7, it may be determined that types of the bytecode having the offsets of 0, 7, 19, and 28 are all an integer type. Therefore, it may be determined that a type of the formal parameter n is an integer type.

S303: Determine an operation type of the bytecode based on the type information of the target data in each function.

One function is used as an example. The operation type of the bytecode corresponding to the function may be a union set of a type of the target data in the function. For example, for an add function "a + b", bytecode corresponding to the add function may include bytecode corresponding to target data a, "+", and b. The target data a is an integer type, and the target data b is a string type. In this case, an operation type of the bytecode corresponding to the add function may be "an add operation of the integer type and the string type".

In an embodiment, the bytecode converted from the source code corresponds to at least one function, and each function may correspond to at least one line of bytecode. In this embodiment of this application, the electronic device may determine an operation type of each line of bytecode based on type information of target data in a function corresponding to each line of bytecode.

In an embodiment, the electronic device may alternatively determine the operation type of the bytecode based on semantics of the bytecode and the type information of the target data. For example, a rule for determining the operation type of the bytecode may be predefined. For example, the following may be predefined: For bytecode of a computation type, the operation type of the bytecode may be determined based on a type of a computation output result. For example, as shown in b in FIG. 4, the following may be predefined: For bytecode including "get_loc", an operation type of the bytecode may be determined based on a type of an operand of the bytecode.

S304: Hint the operation type of the bytecode.

After obtaining the operation type of the bytecode, the electronic device may hint the operation type of the bytecode.

In an embodiment, for each function, the electronic device may hint an operation type of each line of bytecode of the function, so that the electronic device may hint the operation type of the bytecode corresponding to the source code.

The bytecode shown in b in FIG. 6 is used as an example, and the bytecode with the hinted operation type may be shown in FIG. 7.

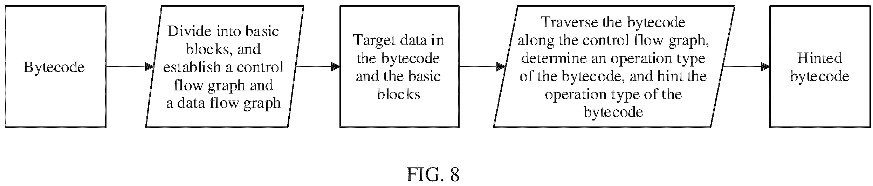

FIG. 8 is a process of hinting an operation type of bytecode by an electronic device. Refer to FIG. 8. After obtaining the bytecode, the electronic device may divide, based on a function name, the bytecode into basic blocks by using a function as a unit, and each basic block may correspond to one function. The electronic device may further establish a control flow graph and a data flow graph based on the bytecode. The electronic device may determine target data in each function, traverse the bytecode along the control flow graph, determine an operation type of the bytecode based on type information of the target data, hint the operation type of the bytecode, and finally obtain the hinted bytecode.

In this embodiment of this application, during static compilation of a dynamically typed language, the electronic device may determine an operation type of bytecode corresponding to a function based on type information of target data in the bytecode by using the function as a unit, and hint the operation type of the bytecode. A dynamic characteristic of the dynamically typed language does not need to be limited, and the operation type of the bytecode may be further accurately hinted. In this case, in a process of running a program, the electronic device does not need to perform type checking on the program or reduces type checking on the program, so that running efficiency of the program can be improved.

Based on the method shown in FIG. 3, the electronic device cannot obtain the operation type of the bytecode in some cases. To obtain the operation type of the bytecode more comprehensively, in an embodiment, the electronic device may alternatively run the bytecode, to obtain the operation type of the bytecode in a running process of the bytecode, supplementing a disadvantage of the method shown in FIG. 3. For example, the target data is a variable. For example, a type of the variable is not hinted in source code, and the method shown in FIG. 3 is insufficient to determine the type of the variable in a computation operation in which the variable participates in the program. For example, over-generalization of the type of the variable leads to over-generalization of an inferred operation type of the bytecode. In this case, in this embodiment of this application, the operation type of the bytecode may be obtained in the running process of the bytecode, to supplement the disadvantage of the method shown in FIG. 3.

In an embodiment, a virtual machine may be deployed in the electronic device, and the virtual machine may perform interpreted execution on the source code. In an embodiment, the virtual machine may include an interpreter (interpreter). The interpreter may perform interpreted execution on the source code. In a process of interpreted execution, the interpreter may convert the source code into bytecode, and run the bytecode. For example, an operation type hinting module may obtain the operation type of the bytecode in a process of running the bytecode by the interpreter, and hint the operation type of the bytecode.

In this embodiment of this application, an instrumentation module may be deployed at an entrance of a function of the virtual machine. That is, instrumentation is performed at the entrance of the function of the virtual machine. In a process in which the virtual machine (for example, an interpreter in the virtual machine) runs the bytecode, the instrumentation module may record operation information of the bytecode. In an embodiment, the operation information of the bytecode may include a type of an operand of the bytecode and a type of an operation result of the bytecode. A backend information analysis module of the virtual machine may receive the operation information of the bytecode from the instrumentation module, and maintain the operation information of the bytecode. In an embodiment, the backend information analysis module may further maintain a function status. For example, a function is called, or a function returns.

In an embodiment, the operation type hinting module may determine the operation type of the bytecode based on the operation information that is of the bytecode and that is maintained by the backend information analysis module.

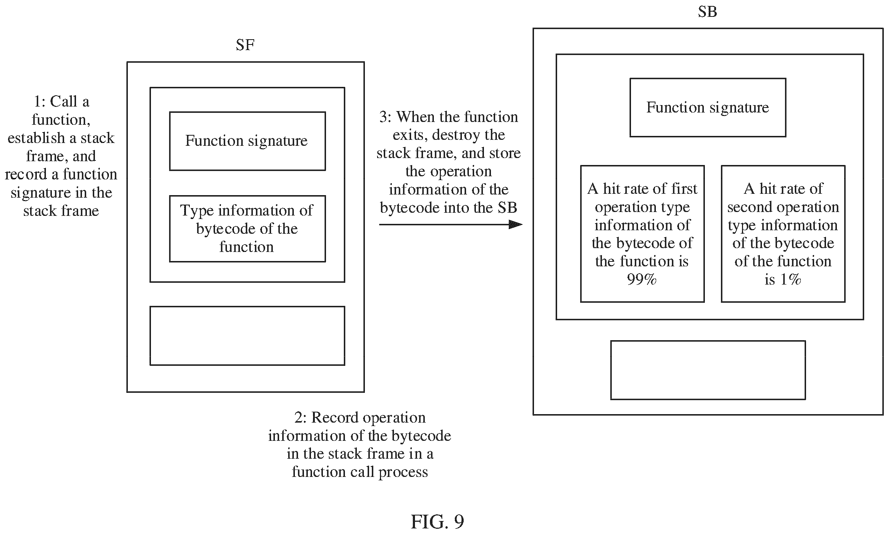

It should be understood that, in the process of running the bytecode, the virtual machine may call a function corresponding to the bytecode. Each time the virtual machine calls a function, a stack frame is maintained. The stack frame may be used to transfer a parameter, save a return address, save a local variable, and the like. Refer to FIG. 9. In the running process of the bytecode, a stack frame may be established at the top of a stack frame (SF). The stack frame is responsible for tracking a status of the interpreter. For example, each time the interpreter runs the bytecode and calls a function (namely, an into function), space may be opened up at the top of the stack frame, to record a function signature of a currently called function. The operation information of the bytecode may be further recorded in the stack frame in a function call process. When the function returns (out function), the stack frame may be destroyed, and the operation information that is of the bytecode and that is recorded in the stack frame is stored in a ScoreBoard (SB). The backend information analysis module of the virtual machine may maintain the operation information of the bytecode in the ScoreBoard.

The ScoreBoard is used to store the operation information of the bytecode each time the function is called. In an embodiment, in a process in which a same function is called for a plurality of times, the type of the operand of the bytecode and the type of the operation result of the bytecode that are obtained by the electronic device may be different. That is, the operation information of the bytecode is different. The backend information analysis module may further compute hit rates (hit rates) of different operation information that is of the bytecode and that is obtained when a same function is called, and the backend information analysis module may store the hit rates of the different operation information of the bytecode corresponding to the function in correspondence with a function name of the function.

For example, a function is called 100 times, operation information that is of the bytecode and that is obtained 99 times includes an add operation of a of a string type and b of a string type, and operation information that is of the bytecode and that is obtained once includes an add operation of a of a string type and b of an integer type. The operation information that is of the bytecode and that is obtained 99 times may be referred to as first operation information, and the operation information that is of the bytecode and that is obtained once may be referred to as second operation information.

The backend information analysis module may obtain, through computation, that, in 100 times of calling the function, a hit rate of the first operation information is 99%, and a hit rate of the second operation information is 1%. The backend information analysis module may store "The hit rate of the first operation information is 99%, and the hit rate of the second operation information is 1%" in correspondence with the function. For example, as shown in FIG. 9, the backend information analysis module may store "The hit rate of the first operation information is 99%, and the hit rate of the second operation information is 1%" in the ScoreBoard in correspondence with the function signature (function signature) of the function.

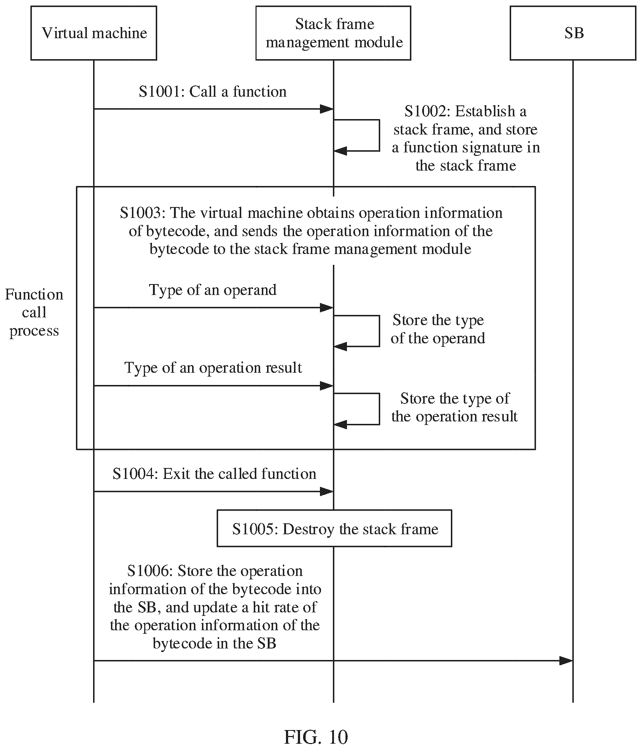

The following describes a calling process of a function with reference to FIG. 10. FIG. 10 is a schematic flowchart of a single calling process of a function. Refer to FIG. 10. A process of calling a function by a virtual machine may include the following steps.

S1001: The virtual machine calls a function.

S1002: A stack frame management module (call stack) establishes a stack frame, and stores a function signature in the stack frame.

The stack frame management module may allocate space to the function at the top of the stack frame. The allocated space may be referred to as a stack frame. A process in which the stack frame management module allocates space to the function may be referred to as a process of establishing a stack frame. The stack frame management module may store the function signature in the stack frame.

S1003: In a function call process, an instrumentation module in the virtual machine obtains operation information of bytecode, and sends the operation information of the bytecode to the stack frame management module.

In the function call process, an interpreter may perform interpreted execution on the bytecode, and the instrumentation module may obtain a type of an operand of the bytecode, and then send the type of the operand of the bytecode to the stack frame management module. Correspondingly, the stack frame management module may store the type of the operand of the bytecode into the stack frame. When the function call is completed, the interpreter completes interpreted execution on the bytecode, and the instrumentation module may obtain a type of an operation result of the bytecode, and then may send the type of the operation result of the bytecode to the stack frame management module. Correspondingly, the stack frame management module may store the type of the operation result of the bytecode into the stack frame.

S1004: The virtual machine exits the called function.

S1005: The stack frame management module destroys the stack frame.

That the stack frame management module destroys the stack frame may be understood as: The stack frame management module pops the stack frame allocated at the top of the stack frame from the stack.

S1006: A backend information analysis module in the virtual machine stores the operation information of the bytecode into a ScoreBoard, and updates a hit rate (hit rate) of the operation information of the bytecode in the ScoreBoard.

Each time the function is called, the hit rate of the operation information of the bytecode changes. Therefore, when the function exits, the backend information analysis module may update, based on a quantity of occurrence times of the operation information of the bytecode, the hit rate of the operation information of the bytecode corresponding to the function in the ScoreBoard.

In an embodiment, an electronic device may obtain the operation information of the bytecode in a running process of the bytecode, and the electronic device may determine an operation type of the bytecode based on the operation information of the bytecode. The electronic device may determine the operation type of the bytecode based on semantics of the bytecode and the operation information of the bytecode. For example, a rule for determining the operation type of the bytecode may be predefined. For example, the following may be predefined: For bytecode of a computation type, the operation type of the bytecode may be determined based on a type of an operation result. For example, for push_0 (push a 0 to a running stack), an operation type of the bytecode may be determined based on a type of an operation result. For example, for bytecode including "get_loc", an operation type of the bytecode may be determined based on a type of an operand of the bytecode. For example, for an add operation, the electronic device may pop two operands at the top of the running stack from the stack, and then push a sum of the two operands into the stack. The electronic device may determine the operation type of the bytecode based on types of the operands participating in the operation.

Because different operation types of bytecode may be obtained in different calling processes of a same function, in an embodiment, the electronic device may determine an operation type of the bytecode based on a hit rate of operation information of the bytecode of the function. In an embodiment, the electronic device may determine the operation type of the bytecode based on operation information that is of the bytecode and that has a largest hit rate. In an embodiment, the electronic device may alternatively determine the operation type of the bytecode based on top N pieces of operation information that are of the bytecode and that are sorted by hit rate. N may be an integer greater than or equal to 1, and the hit rates may be sorted in descending order of hit rate. In an embodiment, the electronic device may determine the operation type of the bytecode based on all operation information of the bytecode. This is not limited in this embodiment of this application.

In this embodiment of this application, the electronic device may determine the operation type of the bytecode based on a type of target data in each function corresponding to the bytecode by using the method shown in FIG. 3, and the electronic device may alternatively determine the operation type of the bytecode in the running process of the bytecode. Due to existence of a branch instruction in the bytecode, operation types of some bytecode are missing in the operation types that are of the bytecode and that are obtained by separately using the method shown in FIG. 3 or the method for running bytecode. In other words, if the method shown in FIG. 3 or the method for running bytecode is separately used, there may be a problem that the electronic device cannot comprehensively obtain the operation types of the bytecode. In addition, because control flows of the function are different when the function is run for a plurality of times, operation types that are of the bytecode and that are obtained each time the function is run are also different. In addition, an asynchronous mechanism of JS disrupts execution of the function, and causes interruption of an operation type obtained by the electronic device. For example, in a QuickJS virtual machine, execution of a function is interrupted when an async/await mechanism is triggered. An asynchronous function is put into a task list, and after a main function exits, the saved task is pushed back into an execution stack.

To ensure that the electronic device can comprehensively and completely obtain the operation information of the bytecode, and to accurately hint the operation type of the bytecode, in this embodiment of this application, the operation types that are of the bytecode and that are obtained by using the two methods may be fused, so that the electronic device can obtain more comprehensive operation types of the bytecode.

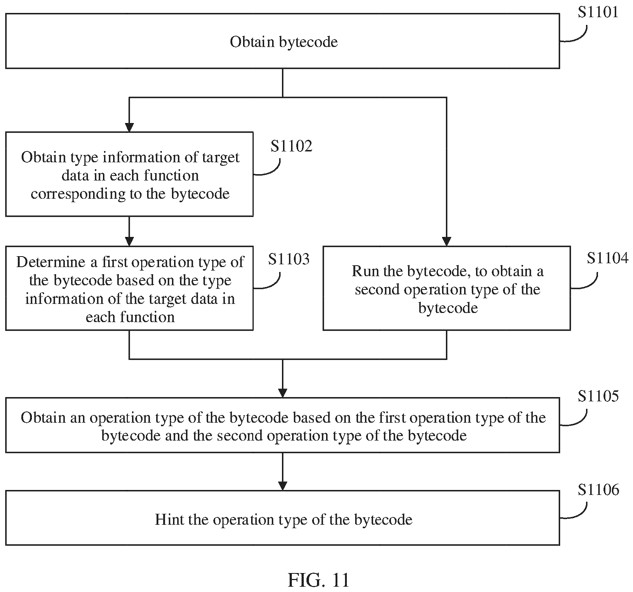

Refer to FIG. 11. In this embodiment, a method for hinting an operation type of bytecode provided in this embodiment of this application may include the following steps.

S1101: Obtain the bytecode.

S1102: Obtain type information of target data in each function corresponding to the bytecode.

S1103: Determine a first operation type of the bytecode based on the type information of the target data in each function.

For S1101 to S1103, refer to the descriptions in S301 to S303. In an embodiment, to distinguish between operation types that are of the bytecode and that are obtained by an electronic device by using two methods, an operation type that is of the bytecode and that is determined based on the type information of the target data in each function may be used as the first operation type of the bytecode.

S 1104: Run the bytecode, to obtain a second operation type of the bytecode.

For S 1104, refer to the descriptions in FIG. 9. In this embodiment of this application, an operation type that is of the bytecode and that is obtained by running the bytecode may be used as the second operation type of the bytecode.

It should be understood that there is no sequence of performing S 1104, and S 1102 and S 1103, that is, S1102 and S1103 may be performed simultaneously with S1104.

S 1105: Obtain the operation type of the bytecode based on the first operation type of the bytecode and the second operation type of the bytecode.

After obtaining the first operation type of the bytecode and the second operation type of the bytecode, the electronic device may fuse the first operation type and the second operation type, to obtain the operation type of the bytecode. The electronic device may prestore a fusion policy, and the electronic device may fuse the first operation type and the second operation type based on the fusion policy.

In an embodiment, the fusion policy may be: The electronic device may use a union set of the first operation type and the second operation type as the operation type of the bytecode. For example, the first operation type that is of the bytecode and that may be determined by the electronic device by using the method shown in FIG. 3 includes: An operation type of bytecode 1 is 1A, an operation type of bytecode 2 is 2A, and an operation type of bytecode 4 is 4A, and the second operation type that is of the bytecode and that may be determined by the electronic device by using the method for running bytecode includes: The operation type of the bytecode 1 is 1A and 1B, the operation type of the bytecode 2 is 2A, and an operation type of bytecode 3 is 3A, so that the electronic device fuses the first operation type and the second operation type, and may determine that the operation type of the bytecode includes: The operation type of the bytecode 1 is 1A and 1B, the operation type of the bytecode 2 is 2A, the operation type of the bytecode 3 is 3A, and the operation type of the bytecode 4 is 4A.

In an embodiment, when the electronic device fuses the first operation type and the second operation type, if both the first operation type and the second operation type include an operation type of same bytecode, the operation types of the same bytecode in the first operation type and the second operation type should be the same. Therefore, if an operation type of same bytecode exists in the first operation type and the second operation type, the electronic device may detect whether the operation types of the same bytecode in the first operation type and the second operation type are the same. If the operation types of the same bytecode in the first operation type and the second operation type are the same, the electronic device may fuse the operation types of the same bytecode in the first operation type and the second operation type. If the operation types of the same bytecode in the first operation type and the second operation type are different, the electronic device may not fuse or delete the operation types of the same bytecode in the first operation type and the second operation type.

In an embodiment, if an operation type of same bytecode exists in the first operation type and the second operation type, the electronic device may detect whether types of target data corresponding to the same bytecode in the first operation type and the second operation type are the same. If the types of the target data corresponding to the same bytecode in the first operation type and the second operation type are the same, the electronic device may fuse the operation types of the same bytecode in the first operation type and the second operation type. If the types of the target data corresponding to the same bytecode in the first operation type and the second operation type are different, the electronic device may not fuse or delete the operation types of the same bytecode in the first operation type and the second operation type.

In an embodiment, the fusion policy may be as follows: The electronic device may obtain hit rates of different operation types of same bytecode in the first operation type and the second operation type, and then fuse the first operation type and the second operation type of the same bytecode based on the hit rates of the different operation types of the same bytecode.

In an embodiment, for same bytecode, the electronic device may use an operation type that has a largest hit rate as an operation type of the bytecode. In an embodiment, the electronic device may alternatively use all operation types of the bytecode as the operation type of the bytecode.

For example, a in FIG. 6 shows source code of a Fibonacci function, and b in FIG. 6 shows bytecode of the Fibonacci function. As shown in b in FIG. 6, for each piece of bytecode, a number in front of the bytecode represents an offset of the bytecode in all the bytecode. For example, for a line of bytecode "0: get_arg0", "a first digit 0" in the line of bytecode represents that an offset of the line of bytecode in all the bytecode is 0, and "get_arg0" in the line of bytecode represents specific content of the line of the bytecode.

Table 1 shows the bytecode of the Fibonacci function. The electronic device may obtain different operation types of the bytecode of the function by using the method shown in FIG. 3 and the method for running bytecode. For example, Table 1 shows four different operation types of the bytecode of the Fibonacci function. In an embodiment, the four different operation types of the bytecode of the Fibonacci function may be referred to as four versions of operation types. In this embodiment of this application, the electronic device may determine an operation type of the bytecode of the Fibonacci function based on different versions of operation types. In other words, in this embodiment of this application, the electronic device may fuse operation types of bytecode of a function in different versions, to determine an operation type of the bytecode.

In an embodiment, the operation types of the bytecode in different versions may include a first operation type and/or a second operation type. For example, for different functions, the electronic device may obtain a first operation type and/or a second operation type of the function. Therefore, an operation type of bytecode corresponding to the function may include the first operation type and/or the second operation type.

For example, the electronic device can obtain the first operation type of the bytecode corresponding to the function by using the method shown in FIG. 3. However, if the electronic device does not call the function, the electronic device cannot obtain the second operation type of the bytecode corresponding to the function by using the method for running bytecode. In this case, the electronic device can obtain only the first operation type of the bytecode. For example, the electronic device fails to obtain the first operation type of the bytecode corresponding to the function by using the method shown in FIG. 3, but the electronic device can obtain the second operation type of the bytecode corresponding to the function by using the method for running bytecode. In this case, the electronic device can obtain only the second operation type of the bytecode. For example, for some functions, the electronic device can obtain the first operation type of the bytecode corresponding to the function by using the method shown in FIG. 3, and the electronic device can also obtain the second operation type of the bytecode corresponding to the function by using the method for running bytecode. In this case, the electronic device can obtain the first operation type and the second operation type of the bytecode.

**Table 1**

| Bytecode | Version v1 (quantity of times hit = 1) | | Version v2 (quantity of times hit = 10944) | | Version v3 (quantity of times hit = 4181) | | Version v4 (quantity of times hit = 6765) | |
|---|---|---|---|---|---|---|---|---|
| | Operand operand | Operation result result | Operand operand | Operation result result | Operand operand | Operation result result | Operand operand | Operation result result |
| 0 | | S | | I | | I | | I |
| 1 | | I | | I | | I | | I |
| 2 | S I | B | I I | B | I I | B | I I | B |
| 3 | B | B B | B | B B | B | B B | B | B B |
| 4 | B | | B | | B | | B | |
| 6 | B | | B | | - | - | B | |
| 7 | | S | | I | - | - | | I |
| 8 | | I | | I | - | - | | I |
| 9 | S I | B | I I | B | - | - | I I | B |
| 10 | | B | | B | | B | | B |
| 12 | - | - | - | - | | I | | I |
| 13 | - | - | - | - | I | | I | |
| 14 | | O | | O | - | - | - | - |
| 19 | | S | | I | - | - | - | - |
| 20 | | I | | I | - | - | - | - |
| 21 | S I | I | I I | I | - | - | - | - |
| 22 | I | I | I | I | - | - | - | - |
| 23 | | O | | O | - | - | - | - |
| 28 | | S | | I | - | - | - | - |
| 29 | | I | | I | - | - | - | - |
| 30 | S I | I | I I | I | - | - | - | - |
| 31 | I | I | I | I | - | - | - | - |
| 32 | I I | I | I I | I | - | - | - | - |
| 33 | I | | I | | - | - | - | - |

As shown in Table 1, bytecode offsets of "0 to 33" in Table 1 represent different bytecode in the Fibonacci function. Table 1 shows the operation types of the bytecode of the Fibonacci function in the four versions, and a quantity of occurrence times hit of each version of the operation type. The four versions are respectively a version v1, a version v2, a version v3, and a version v4. The electronic device may obtain a hit rate of the operation type of the bytecode of the Fibonacci function in each version based on the quantity of occurrence times hit of each version of the operation type and a total quantity of occurrence times of the four versions of the operation types.

For example, the version v1 is used as an example, and a hit rate of the operation type in the version v1 is 1/(1 + 10944 + 4181 + 6765) = 1/21891. Table 1 shows a type of an operand and a type of an operation result that are included in the operation type of the bytecode in each version, where I represents an integer type, S represents a string type, B represents a boolean type, and O represents an object type (object).

"-" in Table 1 indicates that a control flow does not pass through the bytecode. The version v1 and the version v2 have a same control flow, and a difference lies in that, in the version v1, an actual parameter received by a formal parameter n is a string "20". Because a result of an operation between the string "20" and an integer type constant is an integer type, in a subsequent function call process, actual parameters received by the Fibonacci function are all an integer type, and then a hit value of the version v1 is 1. In the version v3 and the version v4, actual parameters corresponding to the formal parameter n are 0 and 1 respectively. Even if types of the actual parameters are the same, different control flows are formed due to different values, and then different type versions are generated.

S1106: Hint the operation type of the bytecode.

For S 1106, refer to the descriptions in S304.

In this embodiment of this application, the electronic device may further run the bytecode, to obtain the second operation type of the bytecode in a running process of the bytecode. In this case, the electronic device may fuse the first operation type and the second operation type of the bytecode, to obtain the operation type of the bytecode, so that comprehensiveness and accuracy of the operation type of the bytecode can be improved.

In an embodiment, after hinting the operation type of the bytecode, the electronic device may further generate binary code based on the hinted bytecode. For example, after hinting the operation type of the bytecode, an operation type hinting module may send the hinted bytecode to a virtual code generation module. The virtual code generation module may cooperate with a machine code generation module, and generate the binary code based on the hinted bytecode. For details, refer to the related descriptions in FIG. 2.

In this embodiment of this application, for the bytecode, because the electronic device may obtain operation types of the bytecode in different versions, the electronic device may generate different versions of binary code based on the operation types of the bytecode in the different versions. For example, in this embodiment of this application, the electronic device may obtain operation types of bytecode corresponding to each function in different versions by using the function as a unit. Therefore, the electronic device may obtain different versions of binary code of each function based on the operation types of the bytecode corresponding to each function in the different versions.

In an embodiment, templates of binary code corresponding to different versions of operation types may be prestored in the electronic device. After obtaining the operation types of the bytecode corresponding to each function in the different versions, the electronic device may generate different versions of binary code based on the templates of the binary code corresponding to the operation types of the bytecode in the different versions.

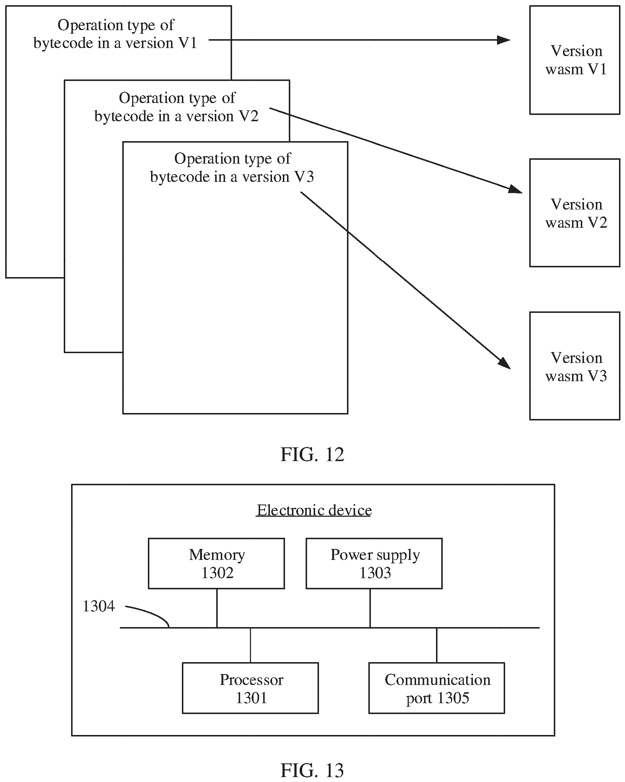

FIG. 12 is a diagram of generating different versions of binary code according to an embodiment of this application. Refer to FIG. 12. For example, for a function, an electronic device may obtain operation types of bytecode corresponding to the function in three versions, and the three versions of the operation types are respectively a version V1, a version V2, and a version V3. Therefore, the electronic device may generate three corresponding versions of binary code based on the operation type of the bytecode corresponding to the function in each version, and the three versions of the binary code are respectively a version wasm V1, a version wasm V2, and a version wasm V3.

In this embodiment of this application, because the electronic device may obtain operation types of bytecode corresponding to a function in different versions, correspondingly, the electronic device may generate different versions of binary code based on the operation types of the bytecode corresponding to the function in the different versions, so that the electronic device can obtain comprehensive and accurate binary code.

It should be noted that user information and data (including but not limited to data used for analysis, stored data, displayed data, and the like) in this application are information and data that are authorized by a user or fully authorized by all parties. In addition, collection, use, and processing of related data need to comply with related laws, regulations, and standards of related countries and regions, and a corresponding operation entry is provided for the user to choose to authorize or reject.

In an embodiment, an embodiment of this application further provides an electronic device. FIG. 13 is a diagram of another structure of an electronic device according to an embodiment of this application. Refer to FIG. 13. The electronic device may include a processor 1301 (for example, a CPU) and a memory 1302. The memory 1302 may include a high-speed random access memory (random access memory, RAM), or may further include a non-volatile memory (non-volatile memory, NVM), for example, at least one disk memory. The memory 1302 may store various instructions, to complete various processing functions and implement the method steps of this application.

Optionally, the electronic device in this application may further include a power supply 1303, a communication bus 1304, and a communication port 1305. The communication port 1305 is configured to implement connection and communication between the electronic device and another peripheral. In this embodiment of this application, the memory 1302 is configured to store computer-executable program code. The program code includes instructions. When the processor 1301 executes the instructions, the instructions enable the processor 1301 of the electronic device to perform the actions in the foregoing method embodiments. Implementation principles and technical effects of the processor 1301 are similar to those of the method embodiments. Details are not described herein again.

It should be noted that the modules or components in the foregoing embodiments may be configured as one or more integrated circuits for implementing the foregoing methods, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented in a form of scheduling program code by a processing element, the processing element may be a general-purpose processor, for example, a central processing unit (central processing unit, CPU) or another processor that can invoke the program code, such as a controller. For still another example, the modules may be integrated together, and implemented in a form of a system-on-a-chip (system-on-a-chip, SOC).

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer, some or all of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

The term "a plurality of" in this specification means two or more. The term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between associated objects. In a formula, the character "/" indicates a "division" relationship between associated objects. In addition, it should be understood that terms such as "first" and "second" in the descriptions of this application are merely used for distinction and description, and shall not be understood as an indication or implication of relative importance or an indication or implication of a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A method for hinting an operation type of bytecode, comprising:
obtaining the bytecode;
obtaining type information of target data in each function corresponding to the bytecode;
determining a first operation type of the bytecode based on the type information of the target data in each function; and
hinting the operation type of the bytecode based on the first operation type.

2. The method according to claim 1, wherein the method further comprises:
determining a second operation type of the bytecode in a running process of the bytecode; and
the hinting the operation type of the bytecode based on the first operation type comprises:
obtaining the operation type of the bytecode based on the first operation type and the second operation type; and
hinting the operation type of the bytecode based on the operation type of the bytecode.

3. The method according to claim 1 or 2, wherein the target data comprises at least one of the following: a function formal parameter, a function return value, a global variable, and a variable in a closure.

4. The method according to any one of claims 1 to 3, wherein the obtaining type information of target data in each function corresponding to the bytecode comprises:
establishing a control flow graph and a data flow graph of the bytecode;
in a process of establishing the control flow graph and the data flow graph, gathering, by using a union-find algorithm, target data that appears in operands of same bytecode, to obtain at least one first set; and
determining a type of target data of an unknown type based on a type of target data of a known type in each first set, to obtain type information of the target data of the unknown type.

5. The method according to any one of claims 1 to 3, wherein the bytecode comprises first bytecode and second bytecode, and the method further comprises:
determining a logical association relationship between the first bytecode and the second bytecode;
determining a type of the second bytecode of an unknown type based on a type of the first bytecode of a known type; and
determining, based on the type of the second bytecode, type information of target data associated with the second bytecode.

6. The method according to claim 5, wherein before the determining a type of the second bytecode of an unknown type based on a type of the first bytecode of a known type, the method further comprises:
when an output of the first bytecode is an input of the second bytecode, and the first bytecode and the second bytecode meet a preset condition, gathering the first bytecode and the second bytecode, to obtain at least one second set.

7. The method according to claim 6, wherein the preset condition is that neither the first bytecode nor the second bytecode is a comparison instruction.

8. The method according to any one of claims 1 to 3, wherein the obtaining type information of target data in each function corresponding to the bytecode comprises:
simulating the running process of the bytecode, to obtain the type information of the target data in each function.

9. The method according to any one of claims 1 to 8, wherein the type information of the target data in each function comprises a type of the target data in each function; and
the determining a first operation type of the bytecode based on the type information of the target data in each function comprises:
using a union set of the type of the target data in each function as the first operation type.

10. The method according to any one of claims 1 to 8, wherein the type information of the target data in each function comprises a type of the target data in each function, and each function corresponds to at least one line of bytecode; and
the determining a first operation type of the bytecode based on the type information of the target data in each function comprises:
using a union set of a type of target data in a function corresponding to each line of bytecode as an operation type of each line of bytecode, wherein the first operation type comprises an operation type of the at least one line of bytecode corresponding to each function.

11. The method according to claim 2, wherein the determining a second operation type of the bytecode in a running process of the bytecode comprises:
in the running process of the bytecode, obtaining operation information of bytecode corresponding to a called function, wherein the operation information comprises a type of an operand and a type of an operation result; and
obtaining, based on the operation information of the bytecode corresponding to the called function, an operation type of the bytecode corresponding to the called function.

12. The method according to claim 11, wherein the operation information of the bytecode corresponding to the called function comprises at least two versions, and the obtaining, based on the operation information of the bytecode corresponding to the called function, an operation type of the bytecode corresponding to the called function comprises:
obtaining a hit rate of operation information of the bytecode corresponding to the called function in each version; and
obtaining, based on the hit rate, the operation type of the bytecode corresponding to the called function.

13. The method according to claim 12, wherein the obtaining, based on the hit rate, the operation type of the bytecode corresponding to the called function comprises:
using a union set of operation types corresponding to top N pieces of operation information sorted by hit rate as the operation type of the bytecode corresponding to the called function, wherein N is an integer greater than or equal to 1.

14. The method according to claim 2, wherein the obtaining the operation type of the bytecode based on the first operation type and the second operation type comprises:
using a union set of the first operation type and the second operation type as the operation type of the bytecode.

15. The method according to claim 14, wherein the operation type of the bytecode comprises at least one version, and after the hinting the operation type of the bytecode, the method further comprises:
generating at least one version of binary code based on the hinted bytecode.

16. The method according to any one of claims 1 to 15, wherein the obtaining the bytecode comprises:
receiving source code; and
converting the source code into the bytecode.

17. The method according to any one of claims 1 to 16, wherein the bytecode is obtained from source code written in a dynamically typed language.

18. An apparatus for hinting an operation type of bytecode, comprising:
a processing module, configured to:
obtain the bytecode;
obtain type information of target data in each function corresponding to the bytecode; and
determine the operation type of the bytecode based on the type information of the target data in each function; and
a hinting module, configured to hint the operation type of the bytecode.

19. An electronic device, comprising: a processor and a memory, wherein
the memory stores computer instructions; and
the processor executes the computer instructions stored in the memory, to enable the processor to perform the method according to any one of claims 1 to 17.

20. A computer-readable storage medium, wherein the computer-readable storage medium stores a computer program or instructions, and when the computer program or the instructions are run, the method according to any one of claims 1 to 17 is implemented.
